# EUROPEAN PATENT SPECIFICATION

(11) **EP 1 906 308 B1**
(45) Date of publication and mention of the grant of the patent: **07.11.2012**
(21) Application number: 07117395.9
(22) Date of filing: 27.09.2007
(51) Int. Cl.: G06F 9/46, G06F 17/30

(54) **Method and system for managing by a controller a generic data lock to a data object**
Verfahren und System zum Verwalten einer allgemeinen Datensperre für ein Datenobjekt durch eine Steuerung
Procédé et système de gestion par un contrôleur de verrouillage de données génériques vers un objet de données

(30) Priority: 28.09.2006 US 540266
(43) Date of publication of application: 02.04.2008
(60) Divisional application: 11156818.4
(73) Proprietor: SAP AG, 69190 Walldorf (DE)
(72) Inventor: Bohle, Holger, 69234, Dielheim (DE); Boeckenhauer, Jens, 69168 Wiesloch (DE); Eigemann, Sven-Eric, 69207 Sandhausen (DE)
(74) Representative: Richardt Patentanwälte GbR

(56) References cited:
- US-A1- 2005 091 276
- US-B1- 6 708 195
- US-B1- 6 850 938

## Description

### Technical field

The invention relates to a computer implemented method of managing a generic data lock to a data object, a data processing system and a computer program product.

### Background and related art

Services provided by a computing system may include any type of functionality provided by the system and may be implemented at least in part by software applications of the system. For example, a particular service may include a business functionality and may be implemented by an application which includes business logic to perform the business functionality. Generally speaking, legacy applications exist which have become outdated with respect to the graphical user interface, but which may still implement services which remain useful. For example, the user interface of a legacy application may have become outdated, but the service it implements may still be useful. One approach to using the services of legacy applications includes developing a new application which reuses the services of the legacy application but which updates the graphical user interface.

One problem associated with this approach is that it may be difficult to integrate existing locking behavior of legacy applications into a locking behavior of a new application. Applications typically lock data, in some manner, while the data is being modified by a particular user in order to prevent a different user from accidentally modifying an incorrect version of the data. However, a new application which reuses a service of a legacy application may do so only intermittently, and thus locks set by the legacy application may not be sufficient in a temporal sense to provide locking behavior for a process of the new application.

One problem may for example be, that the new application calls the legacy application with respect to a certain object of the legacy application, whereupon the legacy application performs a processing and terminates processing at a certain point, wherein the new application is still continuously running in the background. If in this case only the state of the art locking behavior of the legacy application would be used, another user accessing the legacy application would not obtain any knowledge about the fact that the object was already previously locked by the legacy application. Therefore, the other user would be able and allowed to perform any kinds of modifications to said object, since due to the previous termination of the processing of the legacy application the legacy application would not remember anymore its previously set lock to said data object. Since the new application is still running in parallel, any access to said object by the new application would lead to serious problems since in the meantime the other user may have already modified said data object.

Thus, some type of new locking behavior associated with the new application is desirable. Furthermore, it may be unknown exactly what type of locking behavior is implemented by the legacy application itself, for example exclusive locking or optimistic locking, and thus it may be desirable that any new locking behavior associated with the new application be developed, and be usable, without detailed knowledge of the locking behavior of the legacy application. Moreover, the locking behavior of legacy applications may not implement some aspects of data locking that have been developed in the interim between the development of the legacy application and the development of the new application. Thus it may be desirable to provide a new locking behavior associated with a new application with an updated or different aspect than was implemented in the locking behavior of the legacy application.

US 6,708,195 B1 does disclose a method of controlling access to objects, such that updates performed by one user are not all written by simultaneous updates by another user. US 6,850,930 B1 does disclose techniques for concurrent access to a resource object, such as a database, including generating a lock data structure for a particular resource object.

### Summary of the invention

The present invention provides a computer implemented method of managing by a controller a generic data lock to a data object, the data object being accessible by the service of a second application, the method comprising receiving a data input by a current operation of a user interface of a first application, the data input being related to the data object, the data object being related to the service. The method further comprises reading a log file, the log file comprising a generic data lock associated with the data object and depending on the generic data lock, calling the service or sending a message to the user interface. In response to calling the service, an updated data lock associated with the data object is received from the second application and the log file is thereupon updated with the received updated data lock. In accordance with the invention, the generic lock is an optimistic lock. For example, in case no optimistic data lock is associated with the data object and no optimistic data lock was associated with the data object during the current operation of the user interface, the service is called. In case no optimistic data lock is associated with the data object and an optimistic data lock was previously associated with the data object during the current operation of the user interface, a message is sent to the user interface. In case an optimistic lock is associated with the data object, the service is called.

Compared to the exclusive lock, an optimistic lock provides more flexibility of accessing a certain data object. An optimistic lock allows multiple users in parallel to access a certain optimistic locked data object with the possibility, that a user interface which at a certain point desires to change the accessed data object has the right to perform such a change action. Therefore, the optimistic lock concept allows for more flexible accesses of multiple different user interfaces to the same data object.

In accordance with the invention, in case the optimistic lock is associated with the data object, a non-exclusive reservation on write access to the data object is granted for the user interface, wherein the optimistic lock is not preventing other user interfaces from being granted other non-exclusive reservations on write access to the data object, wherein the optimistic lock is capable of being converted to an exclusive lock, the converting comprising canceling any other optimistic locks on specific data by other users.

In other words, an optimistic lock grants only a reservation to perform a write access to the data object. This reservation can thereby be granted for a multitude of different user interfaces. However, once one of the user interfaces desires to change from a read only mode for a data object to a writing mode for the data object and to perform changes to the data object, the optimistic lock is converted to the exclusive lock which means that the user which desires to change the data object grants the exclusive right to access the data object. All other users may for example be signaled by the controller that they just lost the reservation on write access and that a change has occurred to the data object. Based on said information, each other user interface may individually decide to either continue working with the changed data object or to terminate using the certain service of the second application.

The method according to the invention has the advantage, that a central unit is provided which is able to manage the locking behavior with respect to the first and the second application. Any first application which intends to use a service running at the second application is controlled regarding the locking of data objects which are accessible by the service of the second application. Since the controller uses the log file to check any data locks to a data object which were previously set by the second application for a certain data object, it is possible to maintain by the controller a continuous locking control to the data object independent of the state of the second application. This allows for example the second application to terminate and quit a certain service completely, whe reas due to the lock management of the controller the lock to the certain data object is still maintained even though a restart of the second application with its service will not remember anymore the previous usage of the lock to said data object.

Depending on the generic data lock the controller is able to call a certain service of the second application or to send a respective message to the user interface of the first application. For example if a second user interface tries to access a data object already locked for the first user interface, the controller may send a respective warning message to said second user interface which indicates that the access to the data object is currently locked and that the second user interface has only the possibility to have reading access to said object.

Each of the above mentioned service calls creates its own user session. This session is disposed by the time the call returns to the caller. Locks set by the service (at the second application) are of course session dependent. However, by the time the session is disposed by the run time, the locks at the second application are deleted and consequently locks used in services cannot be used for any kind of first application built on top of these services.

By using the method according to the invention, it is possible to circumvent these problems, because the management of data locks to a data object is not controlled anymore only by the second application but is managed by a superior control unit which coordinates all accesses to the second application.

In accordance with an embodiment of the invention, the generic lock is an exclusive data lock associated with the current operation of the user interface. Thereby, in case no exclusive data lock is associated with the object, the service is called. In case an exclusive data lock is associated with the data object and the exclusive data lock is further associated with a user interface, the service is also called. However, in case an exclusive data lock is associated with the data object but the exclusive data lock is not associated with the user interface, the data object is locked by the controller and a message is sent to the user interface.

Using the exclusive data lock it is possible to limit the access to a certain data object to a certain actual user interface. Once said user interface has been used for receiving the data input which is related to the data object, the service is called at the second application and even after termination of the second application this exclusive lock to said data object is still controlled i.e. maintained by the controller. Therewith, the same user interface can be used another time to call the same service of the second application and it is ensured, that said user interface still has exclusive access rights to said data object. Any other user interface which also tries to access the data object is receiving a special message from the controller which indicates that the desired access to the data object is limited or prohibited at the moment. Thereupon, the other user interface may for example be presented the possibility to completely abort the present access action or to just access the data object in read only mode.

In accordance with an embodiment of the invention, the generic lock associated with the data object comprises a generic lock object and a generic lock argument, wherein the generic lock argument describes a second application data lock object and a second application data lock argument, wherein the second application data lock object and the second application data lock argument were received with the updated data lock associated with the data object from the second application.

This has the advantage of a management of data locks to data objects independent from the second application. A data input by a current operation of the user interface of the first application is uniquely associated with respective data locks set in response of calling the service at the second application. Therefore, calling the same service again can be easily identified by the controller and therefore respective data locks to data objects accessed by the given service can be easily managed.

In accordance with an preferred embodiment of the invention, the data object is comprised in a database, wherein for accessing the data object a communication is performed between the second application and the database. Alternatively, it is also possible that a communication is performed between the controller and a database or even in between the first application and the database.

In accordance with another embodiment of the invention, the generic lock type is independent of the data lock type originally implemented in the second application. This allows for a flexible implementation of different lock types like for example exclusive locks or optimistic locks dependent on the working area to be covered by the first and the second application.

In accordance with the invention, the method further comprises tracking of the second application data locks set by the second application, wherein the tracking is started before calling the service. This further ensures a permanent updating of the log file in order to make sure that for every new call of the service the correct locks of data objects can be provided.

In accordance with an embodiment of the invention, the second application is used in an effectively stateless manner, the effectively stateless manner comprising initiating the second application in response to the calling of the service and terminating the second application before receiving any other service calls from the first application. This has the advantage, that multiple user interfaces of even multiple first applications can use the second application in a quasi parallel manner. The second application is therewith able to support multi-user inputs: even though the second application may have been originally designed to support only one user by its original user interface, multiple user interfaces can now use the services provided by the second application in an intermitting manner. Therewith, it is possible to transform an original designated single user environment of the second application into a multi-user system.

In accordance with an embodiment of the invention, the first application and the generic data lock are associated with a first session, the second application and the second application data lock are associated with a second session, the first and the second sessions being associated with the user interface, the second session ending before the first session, the method further comprising deleting the second application data lock before terminating the second application.

In accordance with an embodiment of the invention, the method further comprises receiving an output of the second application by the controller in response to calling the service, generating, by the controller, a first checksum based on the data input received by the current operation of the user interface of the first application and the received output, associating the first checksum with the called service and storing the associated first checksum. In case of calling the same service using the same data input again, the method further comprises generating, by the execution controller, a second checksum based on said data input and the respective output received by calling the service using said data input and comparing the second checksum to the first checksum. Thereby, in case the first and the second checksum are differing, a respective message is sent to the user interface.

Such kind of implementation is advantageous in order to cover the case that a user interface is bypassing the controller and directly accessing the second application. In this case, since this user interface is not subject to the locks provided by the controller, said user interface is call services at the second application to write data and therewith to change data objects which would not be recognized by the controller. In case such kind of data object changes would occur, this would lead to a chaotic situation since a further user interface which would be accessing the second application through the controller would suddenly work with data objects with different content as originally designated to be used. Exclusive locks set by the controller would be circumvented and data consistency could not be granted anymore.
Therefore the idea is that for every service call providing the same data input, this service call should return the same output data. If for a subsequent call the input data does not return the same output data anymore the service is either not deterministic (which can be considered as a bug as long as the service does not offer any random number functionality) or the data object has changed and the application is working on outdated data objects. In order to check such a change of the output data with respect to the input data a checksum is generated every time the service is called. Checksums are stored and compared to each other each time the service is called again with the same data input. For this purpose, for example an MD5 hashing algorithm can be used.

In the case that the checksums of two accesses to a service of the second application differ, the message which is sent to the user interface may for example comprise a selection probability to read data, continue anyway or cancel the current access.

In accordance with an embodiment of the invention, the user interface of the first application is a first graphical user interface and the second application comprises a second graphical user interface presentable on a display of the second application for a user's navigation through a number of display outputs of the second application. The second application further comprises a second interface, the second interface comprising a batch input functionality, wherein said second interface is adapted to receive the call of the service, wherein the call of the service is comprised in a stack of action scripts specifying said navigation through the number of display outputs, wherein the second application executes the stack of action scripts, wherein the execution of the stack is performed by batch processing.

The first application comprises a first interface, wherein the first interface is adapted for communication with the second interface. The first application further comprises a first graphical user interface presentable on a display of the first application, wherein the display outputs of the second application are mapped to the display outputs of the first application by mapping means. Therewith in other words, the second graphical user interface of the second application can be substituted by the first graphical user interface of the first application, wherein the batch input functionality of the second application is being used for providing inputs from the first application to the second application, processing the input by a second application and returning respective responses from the second application to the first graphical user interface of the first application.

Thereby, the method further comprises receiving a navigation input by the first application, the navigation input specifying a user's navigation from a current display output of the first application to a next display output of the first application, wherein the current display output is mapped from a display output of the second application to the display output of the first application by the mapping means, wherein the specified user's navigation involves the call of the service at a second application. An action script is added to an ordered stack of action scripts maintained by the controller, wherein the added action script corresponds to the navigation input, wherein the added action script is added last in the order of the ordered stack, wherein the added action script is unpopulated by data input. The service is then called by providing the ordered stack of action scripts to the second interface by the controller and executing the ordered stack of action scripts by the second application according to the order given by the ordered stack of action scripts. A display output of the second application resulting from the execution of the ordered stack is mapped to the next display output of the first application by the mapping means. A data input is then received at the first graphical user interface, wherein the data input is received with respect to the said next display output.

The added action script is then populated with said data input and the ordered stack of action scripts comprising the populated action script is provided to the second interface by the execution controller. The ordered stack of action scripts comprising the populated action script is executed by the second application according to the order given by the ordered stack of action scripts. A display output of the second application resulting from the execution of the ordered stack comprising the populated action script is mapped to a next consecutive display output of the first application by the mapping means. Finally the previous steps are repeated until a stop command is received at a first graphical user interface of the first application.

It has to be noted, that the ordered stack of action scripts may comprise calling a multitude of services. The above mentioned improved method has the advantage, that a first graphical user interface of the first application can be used to redirect display outputs originally designated for the second graphical user interface of the second application to the first graphical user interface of the first application. This allows for example for an improved presentation of data originally designated for a second graphical user interface while maintaining the original software being executed with the second application. The second application can therewith be indirectly upgraded with a new graphical user interface and a need for a reprogramming of the software of the second application for the only purpose for improving the output of the second graphical user interface can be omitted.

The first graphical user interface directly calls the controller and passes data on the controller. Then the controller invokes the second application by means of the service call which is synchronously processed in background mode. As a parameter, this call passes a sequence of screen declarations, field values and navigation commands. According to the sequence, the screen outputs of the second application are processed in the background with integrated functional logic of the second application.

A call of the second application is now able to return messages. The controller picks up the screen values generated by the second application and this way, the field values generated by the second applications can be transferred and mapped to the first application.

By passing the data from the first application to the controller, the controller is immediately able to determine if a respective call of the service by the second application with respect to the received data concerns any data objects which have been previously locked in any way due to previous accesses through the controller.

The reason for using an ordered stack of action scripts instead of directly processing commands received at the first application at the second application and returning respective final values in terms of screen outputs is, that at each action like a navigation input or a data input, the data are freshly received from the second application. The current action stack corresponds to a state hold in the second application even though the communication itself may be stateless. In this way, the first application and the second application stay always synchronized, i.e. the first application cannot miss any changes like implicit correction of values occurring in the second application.

Especially for the embodiment of processing a stack of action scripts by the second application the method of managing a generic data lock to a data object by a controller is extremely useful: if for example a stack of action scripts comprises accessing a certain data object comprised in a database of the second application, a user may navigate through certain display outputs at a first application, wherein the navigation is being based on the content of said data object. Since the second application with its respective service is being called every time when the stack of action scripts is passed by the controller to the second application, after finishing batch processing the second application will not remember anymore any respective data locks previously set for this data object. Therefore, in between providing the stack of action scripts to the second application a first time and providing the ordered stack of action scripts comprising, due to a new navigation, an added action script at a second time, without the data object having been permanently locked by the controller, in the meantime a different user could have had access the data object and could have had changed the data object. This would lead to a situation, that suddenly the original user is working with an outdated data object when calling the service a second time. By locking the data object by the controller for the user interface of the first application (out of multiple first applications), a permanent control over data object access and integrity is available.

In accordance with an embodiment of the invention, in case it is not possible to populate the added action script with data input, the steps previous of receiving a data input are performed again. Such a situation may occur, if for example after execution of the ordered stack of action scripts the display output of the second application mapped to the next display output of the first application does not comprise any possibility to input data. This may for example occur if said next display output of the first application only displays various possibilities a user can use to navigate to different next user input screens. In this case, it is of course not possible to populate the added action script with any data input, since it is not possible for a user to provide any data input at a present state of display output of the first application.

In another aspect, the invention relates to a computer program product comprising computer executable instructions adapted to perform the method according to the invention.

In another aspect, the invention relates to a data processing system comprising a first application, a second application and a controller, the first application comprising a user interface, the controller comprising means for receiving a data input by a current operation of the user interface of the first application, the data input being related to the data object, the data object being related to the service, means for reading a log file, the log file comprising a generic data lock associated with the data object. The controller further comprises means for calling the service and means for sending a message to the user interface. The controller further comprises means for determining if the service is called or if a message is sent to the user interface, wherein the controller is adapted to, depending on the generic data lock, determining if the service is to be called or if a message is to be sent to the user interface. The controller further comprises means for receiving an updated data lock associated with the data object from the second application in response to calling the service and means for updating the log file with the received updated data lock.

### Brief description of the drawings

So that features of the present invention can be understood in detail, a description of the invention can be had by reference to embodiments, some of which are illustrated in the appended drawings. It is to be noted, however, that the appended drawings illustrate only particular embodiments of the invention and are therefore not to be considered limiting of its scope, for the invention may admit to other equally effective embodiments.
- FIG. 1: is a schematic diagram depicting one embodiment of a software.
- FIG. 2: is a schematic diagram depicting one embodiment of a computing environment.
- FIG. 3: is a flow chart depicting a schematic representation of one embodiment of a method.
- FIG. 4: is a flow diagram depicting another schematic representation of one embodiment of the method depicted in FIG. 3.
- FIG. 5: is a flow chart depicting a schematic representation of at least part of one embodiment of the method depicted in FIG. 3, the embodiment of the method depicted in FIG. 5 including providing optimistic generic locking behavior.
- FIG. 6: is a flow chart depicting a schematic representation of at least part of one embodiment of the method depicted in FIG. 3, the embodiment of the method depicted in FIG. 6 including a hashing functionality.
- Fig. 7: shows a flowchart illustrating the method of managing a generic lock to a data object.
- Fig. 8: shows a flowchart illustrating a method of managing an exclusive lock to a data object
- Fig. 9: shows a flowchart illustrating a method of managing an optimistic lock to a data object
- Fig. 10: shows a block diagram illustrating a data processing system according to the invention.

### Detailed description

Embodiments are related to providing a generic locking behavior associated with a first application which utilizes a service performed by a second application.

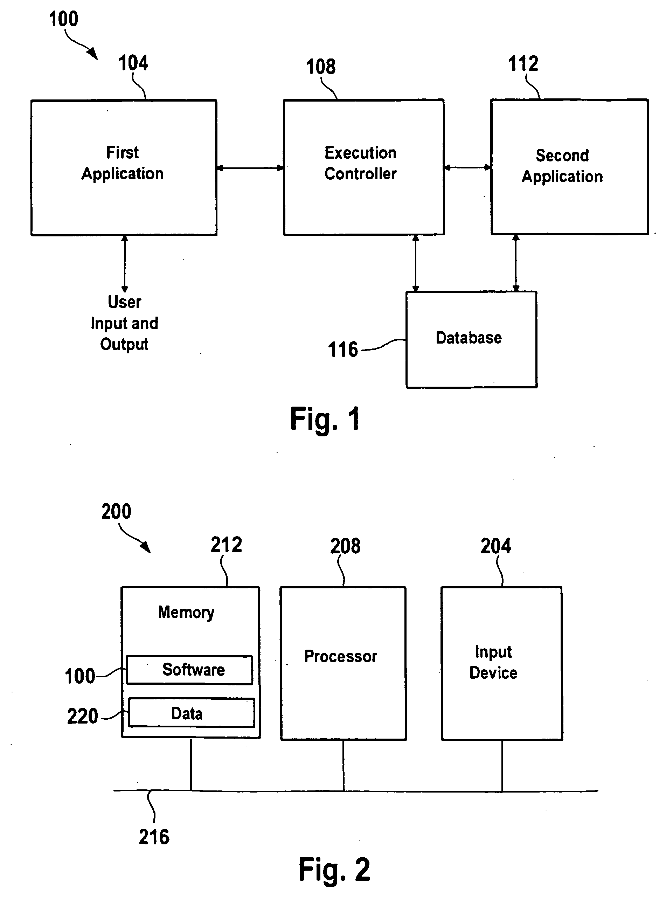

FIG. 1 depicts one embodiment of a software 100. The exemplary embodiment of the software 100 depicted in FIG.1 comprises a first application 104, an execution controller 108 and a second application 112. The first application 104 is capable of receiving an input from a user, and communicating with the execution controller 108. The execution controller 108 is capable of communicating with both the first application 104 and the second application 112. The second application 112 is capable of performing a service. The performing of the service by the second application optionally includes accessing the database 116. In one embodiment, the execution controller 108 is also capable of accessing the database 116. In one embodiment, the first application 104 is a relatively newer application and the second application 112 is a relatively older application, i.e., a legacy application. For example, the first application 104 can be developed to update some undesirable or outmoded aspect of the second application 112. In one embodiment, the first application 104 provides a user interface that is updated relative to a user interface of the second application 112. Other embodiments of the software 100 also exist.

The software 100 depicted in FIG. 1 runs in, and is part of, a computing environment 200. FIG. 2 depicts an exemplary embodiment of the computing environment 200. The computing environment 200 comprises an input device 204, a processor 208, a memory 212 and a communication line 216. The memory 212 further comprises data 220 and the software 100, which are stored in the memory 212 at least at some moment in time. The input device 204 optionally comprises at least one of: a keyboard, a mouse, a voice activated controller, an optical controller, an infrared controller, or other suitable input device. The memory 212 optionally comprises at least one of a random access memory, a disk storage memory, or other suitable memory. The software 100 comprises computer program instructions which may be accessed and executed by the processor 208. The software 100 is implemented in any suitable software language such as, for example, Java, C, C++. The data 220 optionally comprises data which accessible by or integral to the database 116.

The memory 212, processor 208 and input device 204 are connected together, and communicate with each other, by means of the communication line 216. In one embodiment, the communication line 216 comprises a system bus, and the computing environment 200 comprises a single computer. In another embodiment, the communication line 216 comprises a network element, and the computing environment 200 comprises a distributed computing environment. In one embodiment in which the computing environment 200 is distributed, the memory 212, processor 208 and input device 204 are optionally distributed across different locations. In one embodiment in which the computing environment 200 is distributed, the computing environment 200 optionally comprises a plurality of some or all of the memory 212, the processor 208 and the input device 204. Other configurations of the computing environment 200 are also possible.

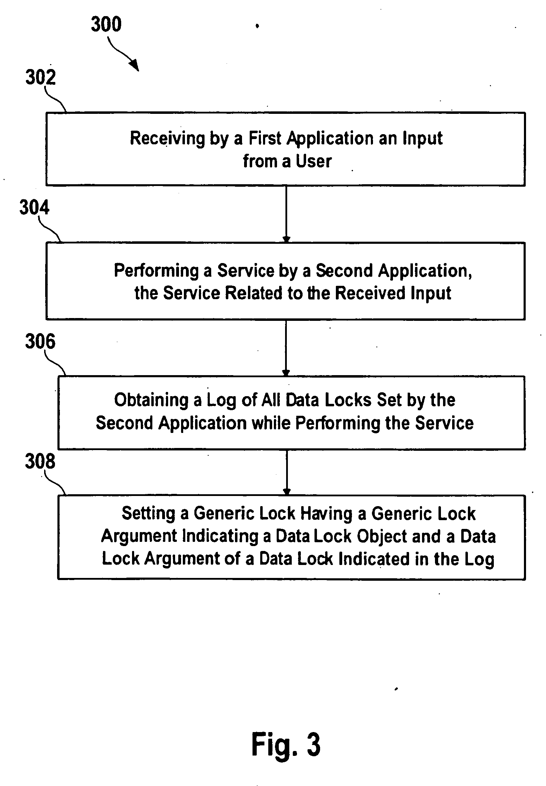

FIG. 3 depicts a schematic representation of one embodiment of a method 300. The method of FIG. 3 is merely one way of carrying out the various embodiments described herein, since variations of the embodiment of the method 300 depicted in FIG. 3 are possible.

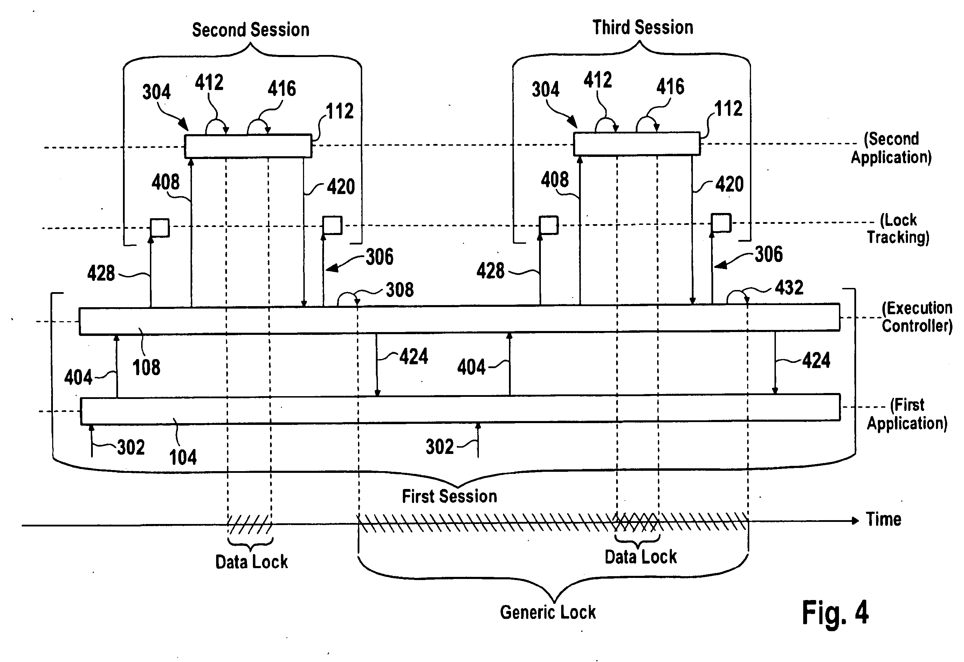

Additionally, FIG. 4 depicts another schematic representation of one embodiment of the method 300 depicted in FIG. 3. The schematic representation FIG. 4 may be useful to further understand embodiments of the method 300 depicted in FIG. 3, and contains additional visual elements, such as arranging the various steps of the method 300 according to a time axis, and also visually organizing elements of the method 300 discussed below.

As depicted in FIG. 1, the method 300 begins at step 302. At step 302, an input from the user is received at the first application 104. The receiving in step 302 optionally comprises the user entering the input using the input device 204. For example, in one embodiment, the first application 104 comprises a graphical user interface, and the user enters the input by manipulating elements of the graphical user interface. In one embodiment, the first application 104 is capable of individually assuming a plurality of different states, each state comprising a specific visual configuration of the graphical user interface, including the visual arrangement of graphical elements and specific data displayed by the state. For the sake of simplicity, the output of a graphical user interfaces presentable on a display of an application is denoted by the term 'state of an application'. The received input optionally changes the state of the first application 104. The receiving in step 302 may also comprise receiving alphanumerical data from the user, or receiving a command from the user. In one embodiment, the first application 104 does not comprise business logic related to implementing a service.

In the method 300, step 304 is performed after step 302. At step 304, a service is performed by the second application 112. The service can include any type of functionality capable of being provided by the second application 112 running in the computing environment 200. For example, in one embodiment the service comprises some type of business functionality. Many different types of business functionalities are envisioned, including, for example, interacting with customers or clients, maintaining employee data, performing transactions etc. Exemplary business services include generating a customer order for a product, changing the customer order, deleting the customer order, etc. Other types of services are also possible, including services that are not related to businesses. In one embodiment, the second application 112 comprises logic which defines rules for performing the service. For example, the second application 112 optionally comprises business logic which defines the rules for performing a service related to business functionality.

In one embodiment, the service performed by the second application 112 comprises accessing the database 116. The database 116 optionally comprises both data and computer program instructions. Accessing the database 116 by a component of the software 100 typically comprises forming a communication link between the component and the database 116. The communication link, which has a particular duration over time, between the component and the database 116 is known as a session. A particular session is usually associated with a particular user. Different embodiments of sessions are possible. For example, in one embodiment, a particular session comprises a communication link between the second application 112 and the database 116. In another embodiment, a particular session comprises a communication link between the execution controller 108 and the database 116. In one embodiment, the database 116 comprises components that provide a server functionality, and the execution controller 108 and the second application, 112 each comprise components that provide a client functionality relative to the server functionality. In such a client-server embodiment, the communication link of the session comprises a link between a server and a client.

In one embodiment of the method 300, the first application 104 is associated with a first session and the second application 112 is associated with a second session. The first and second sessions are both associated with the user. In one embodiment, the first session comprises a first communication link involving the execution controller 108, and the second session comprises a second communication link involving the second application 112, the second communication link being a different communication link than the first communication link. In one embodiment, the first session comprises a first communication link involving the execution controller 108 and the database 116, and the second session comprises a second communication link involving the second application 112 and the database 116, the second communication link being a different communication link than the first communication link. In one embodiment, the first session comprises a first communication link involving the execution controller 108 and a server, and the second session comprises a second communication link involving the second application 112 and a server, the second communication link being a different communication link than the first communication link. In one embodiment, the server may be regarded as part of the database 116.

In one embodiment, the performing of the service in step 304 comprises executing a plurality of commands by the second application 112 to perform the service. The service is related to the input received by the first application 104, but is not limited to a one-to-one correspondence between input commands received by the first application 104 and commands executed by the second application 112 to perform the service. For example, the input received by the first application 104 may comprise a single input command, such as for example, save, print, or modify, but the performing of the related service by the second application 112 may comprise executing a plurality of commands.

In one embodiment in which the method 300 is implemented using the software 100 depicted in FIG. 1, the execution controller 108 acts as an intermediary between the first application 104 and the second application 108. For example, in one embodiment, the method 300 comprises the first application 104 invoking the service (see step 404 in FIG. 4) from the second application 112 through the execution controller 108. The invoking 404 of the service through the execution controller 108 is in response to the receiving in step 302. That is, the first application 104 receives the input from the user and communicates information related to the input to the execution controller 108 to invoke 404 the service from the second application 112. The execution controller 108 then requests 408 the service from the second application 112 in response to the invoking 404.

The performing of the service in step 304 comprises setting 412 at least one data lock by the second application 112. Data locks are typically set by applications to synchronize access to data for a plurality of users. For example, data locks can prevent different users from accidentally modifying an incorrect version of data, or to prevent multiple users from modifying the same data at the same time. For example, a data lock can deny write access to specific data for a second user while a first user (i.e. the user disthus far) is granted write access to the specific data. During the performing of step 304, the at least one data lock is set 412 by the second application 112 to prevent other users (e.g. the second user) from modifying at least some of the data involved in the performing of the service at step 304. The setting 412 of the data lock also grants the first user write access to the specific data. Upon completing the performance of the service by the second application at step 304, the at least one data lock that was set during the performance of the service is deleted 416.

In one embodiment, the data locks set 412 by the second application 112 are at least partially implemented by the database 116. In one embodiment, the data locks set 412 by the second application 112 are at least partially implemented by a server in communication with the second application 112. For example, in one embodiment, the data locks set 412 by the second application 112 are at least partially implemented by a server functionality that is part of the database 116. In one embodiment, setting 412 of data locks comprises storing information in a memory location globally accessible to relevant portions of the software 100 that may potentially be modifying the data.

A specific data lock set 412 by the second application 112 involves a data lock object and a data lock argument. The data lock object indicates a portion of the data 220 that may be involved in the data locking. In one embodiment, the data lock object indicates a database table. In another embodiment, the data lock object indicates both the database table and a key field of the database table. The data lock object can optionally indicate a plurality of database tables. The data lock object can also optionally indicate a plurality of key fields of the database table. The data lock argument indicates specific data locked by the data locking functionality. In one embodiment, the data lock argument indicates a specific value of a key field of the database table, and thus, in such an embodiment, the data lock argument indicates which subset of the rows of the database table, specified by the data lock object, are to be locked. In one embodiment, the specific value of the data lock argument is a specific value of the key field indicated by the data lock object. In another embodiment, the specific value of the data lock argument is a value of a primary key field that is known to the database 116, but not necessarily indicated by the data lock object.

The performing of the service in step 304 returns 420 a first result by the second application 112 to the execution controller 108. In one embodiment, the execution controller 108 returns 424 a second result, based on the first result, to the first application 104. In another embodiment, the first and second results comprises output data.

In the method 300, step 306 is performed after step 304. At step 306, a log is obtained of all data locks set 412 by the second application 112 during the performing of the service at step 304. For each data lock set 412 by the second application 112, the log indicates the corresponding data lock object and data lock argument. At step 306, the method 300 obtains at least one specific data lock object and at least one specific data lock argument related to at least one specific data lock that was set 412 by the second application 112 during the performing of the service at step 304. In one embodiment, the method 300 obtains a plurality of specific data lock objects and a plurality of specific data lock arguments of a corresponding plurality of specific data locks that were set 412 by the second application 112 during the performing of the service at step 304.

In one embodiment in which the method 300 is implemented using the software 100 depicted in FIG. 1, the method 300 comprises enabling 428, by the execution controller 108, tracking of the data locks set 412 by the second application 112. The enabling 428 by the execution controller 108 is in response to the invoking 404 of the service by the first application 104; and the requesting 408, by the execution controller 108, of the service from the second application 112 is performed after the enabling 428 of the tracking of data locks. In one embodiment, the enabling 428 of the tracking of data locks is performed by the execution controller 108. In one embodiment, the enabling 428 of the tracking of data locks is performed by the execution controller 108 in combination with a global resource available to the software 100 in the computing environment 200, such as a server with which components of the software 100 are capable of communicating. For example, in one embodiment, the enabling 428 comprises the execution controller 108 communicating with a software component of a server managing data locks. In one embodiment, such a server can be considered as a part of the database 116.

In the method 300, step 308 is performed after step 306. At step 308, a generic lock is set. The generic lock provides a generic locking behavior for a process conducted by the first application 104 appropriate to, for example, the context of the first application 104 using services provided by the second application 112. The generic locking accommodates intermittent use of the services of the second application 112 and its data locking behavior. In one embodiment, the generic locking behavior can also provide locking behavior functionality which is enhanced or different relative to the data locking behavior of the second application 112.

The generic lock has an associated generic lock object and a generic lock argument. The generic lock is more general than the data lock and can lock different types of functionalities. The generic lock object indicates a type of the generic locking functionality. For example, in one embodiment, the generic lock object indicates that the generic lock object locks against the use of data locks. The generic lock argument indicates a specific target of the generic locking functionality. For example, in one embodiment, the generic lock argument indicates a specific data lock to lock. In the method 300, the value of the generic lock argument of the generic lock set during the setting at step 308 indicates the specific data lock object and the specific data lock argument of the at least one specific data lock obtained from the log of data locks at step 306. In one embodiment, the setting of step 308 sets a generic lock corresponding to at least one data lock set 412 by the second application 112 during the performing of the service at step 304. In one embodiment, the setting of step 308 sets a generic lock for each data lock set 412 by the second application 112 during the performing of the service at step 304.

One functionality of the generic lock is to prevent the setting of other data locks having the specific data lock object and the specific data lock argument, obtained from the log at step 306, by other users while the first user is conducting an ongoing process in the first application 104. For example, in one embodiment, the fist application 104 individually invokes 404 a plurality of services from the second application 112 over a period of time, and the second application 112 is used in an effectively stateless manner. Using the second application in an effectively stateless manner comprises: initiating an instance of the second application 112 in response to a service request 408 (e.g., thus also in response to the invoking 404 of the service by the first application 104 through the execution controller 108), executing all commands within the second application 112 necessary to perform the service, and then terminating the instance of the second application 112 before responding to any other service requests (i.e., additional invocations 404 of services of the second application 112 by the first application 104 through the execution controller 108). Thus, when used in an effectively stateless manner, the second application 112 initiates, performs a service, and then terminates relatively quickly. It is not kept running once the service has been performed. Without the generic locking provided by the method 300, invoking 404 a plurality of services of the second application 112 individually over a period of time would result in undesirable gaps in data locking provided by the second application 112 between the individual performances of the services when the second application 112 is not running. During these gaps, during which the data locking provided by the second application 112 would be inactive, a second user, without the generic locking provided by the method 300, could undesirably modify data involved in the ongoing process being conducted by the first user via the first application 104.

The generic locking provided by the method 300 provides a solution for these undesirable gaps in data locking coverage. The generic locking provides locking behavior to the combined use of the first application 104 and the second application 112 that prevents the second user from undesirably modifying the data during the ongoing process being conducted by the first user. The generic lock is able to perform this functionality in part because the generic lock argument indicates the specific data lock and specific data lock argument obtained from the data lock log at step 306, and as such is able to prevent other users from setting data locks having this specific data lock object and specific data lock argument.

The functionality of the generic data lock may be further understood through the use of the following pseudocode. For example, in one embodiment, the following data lock is set by the second application 112 during the performing of the service at step 304:
object_1 (argument_1).

In the example, the setting at step 308 would then set the following generic lock:
argument_2 = concatenate (object_1) and (argument_1),
   which concatenates object_1 and argument_1 to a new argument_2. This new argument_2 is then used to set the generic lock
object_2 (argument_2).

Thus, in the example, argument_2 indicates both object_1 and argument_1. In this way, the setting of the generic lock locks against another user using the specific data lock obtained from the data lock log at step 306.

In one embodiment, the setting of the generic lock is performed by the execution controller 108. In another embodiment, the setting of the generic lock is performed by the execution controller 108 in combination with a global resource available to the software 100 in the computing environment 200, such as a server with which applications of the software 100 are capable of communicating. For example, in one embodiment, the setting of the generic lock comprises the execution controller 108 communicating with a server managing data locks. Such a server can be considered as a part of the database 116. In another embodiment, the setting of the generic lock is indicated in a memory accessible by all instances of the first application 104 running in any session, and in one version of such an embodiment, the memory comprises a random access memory.

In one embodiment in which the method 300 is implemented using the software 100 depicted in FIG. 1, the first application 104 and the execution controller 108 are associated with the first session, and the second application 112 and at least part of the lock tracking are associated with the second session. This exemplary delineation of instances of software applications and tasks between the first and second sessions can be further understood by the graphical depiction of FIG. 4. As depicted in FIG. 4, the first application 104 runs, receives the input at step 302, and invokes 404 the service through the execution controller 108 in association with the first session. Additionally, the setting of generic locks of step 308 occurs in association with the first session, for example by the execution controller 108 as shown in FIG. 4. The second application 112 performs the service, and sets 412 data locks in association with a session different than the first session (i.e. the second session, a third session or other sessions). As is depicted in FIG. 4, in one embodiment, some aspect of the tracking of data locks occurs in association with the second session. Furthermore, for each separately invoked service, the second application 112 performs the service and sets data locks in association with different sessions.

For example, in the embodiment depicted in FIG. 4, two separate services are invoked 404 through the execution controller 108, one resulting in a performance of a particular service in association with a second session, and the other resulting in a performance of a particular service in association with a third session. As is depicted in FIG. 4, the second session ends before the third session begins. FIG. 4 also depicts graphically along the timeline the relative durations of the data locks set by the second application 112 in association with the second and third sessions, and the generic locks set in association with the first session. The generic lock can be seen in FIG.4 to cover at least part of the interim between the second session and the third session. In one embodiment, this interim is part of an ongoing process related to the first application 104. Thus, in the embodiment of the method 300 depicted in FIG. 4, the first, second and third sessions are all associated with the first user, and the second and third sessions end before the first session. In the depicted embodiment, the method 300 further comprises deleting 416 the data lock set in the second session before deleting 432 the generic data lock, and setting 412 a second data lock in association with the third session before deleting 432 the generic data lock.

In one embodiment, the generic lock is an optimistic lock and the data lock set by the second application 112 is an exclusive data lock. One advantage to such an embodiment is that the generic locking behavior provided by the method 300 provides upgraded locking functionality relative to the data locking behavior of the second application 112. For example, the second application 112 is optionally a legacy application that only provides exclusive locking behavior, and it may be desirable to upgrade that behavior to provide optimistic locking behavior. An exclusive lock is associated with a specific user, grants write access to specific data for that specific user, and prevents other users from being granted write access to that specific data. An optimistic lock is also associated with a specific user, but grants a non-exclusive reservation on write access to the specific data for that specific user, and does not prevent other users from also being granted other non-exclusive reservations on write access to the specific data. An optimistic lock is capable of being converted to an exclusive lock for the specific user, at which point the converting cancels any other optimistic locks on the specific data associated with other users. In one embodiment, the second application 112 is not capable of setting optimistic locks, and the method 300 thereby associates optimistic locking behavior with the service performed by the second application.

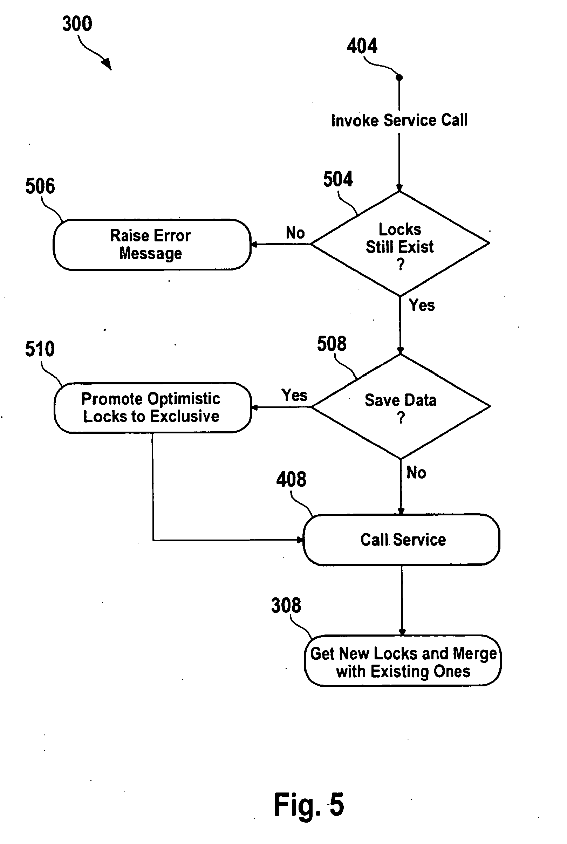

FIG. 5 depicts one scenario involving at least part of an embodiment of the method 300 in which the generic locks which are set by the method 300 are optimistic locks. The embodiment of the part of the method 300 depicted in FIG. 5 may overlap parts of the embodiment of the method 300 depicted in FIG. 3, and provide more detail in some aspects. As depicted in FIG. 5, at step 404 a service from the second application 112 is invoked through the execution controller 108 by the first application 104 for the first user. The scenario depicted in FIG. 5 accommodates the possibility that the first application 104 has previously invoked other services through the execution controller 108 as part of an ongoing process for the first user, and that optimistic locks may have been previously set in relation to the ongoing process. The depicted embodiment of the method 300 performs step 504 after step 404. At step 504, the execution controller 108 checks to make sure that all previously set optimistic locks associated with the ongoing process in the first application 104 are still available as optimistic locks to the ongoing process. If not, that means that some other process, possibly involving another user, has converted one of the previously set optimistic locks to an exclusive lock, and the optimistic lock previously set by the method 300 for the first user has been lost. In such an event, not all of the previously set optimistic locks still exist and the depicted embodiment of the method 300 proceeds to step 506 and raises an error message alerting the first user.

If all the previously set optimistic locks still exist, the depicted embodiment of the method 300 proceeds to step 508. At step 508, the execution controller 108 determines if the service invoked at step 404 involves saving data. If it does, the depicted embodiment of the method 300 proceeds to step 510. At step 510, the method 300 promotes the optimistic generic locks associated with the data to be saved to exclusive generic locks. This will also cancel any other optimistic generic locks associated with the specific data that may have been set by other users, such as by other users also using the first application 104. The depicted embodiment of the method 300 proceeds to step 408 after steps 510, and also upon a negative determination at step 508. At step 408, the execution controller 108 requests the service from the second application 112 which was invoked by the first application 104 at step 404. The depicted embodiment of the method 300 proceeds to step 308 after step 408. At step 308, the execution controller 108 sets any new generic locks that were obtained by the data lock log (at step 306, depicted in FIG. 3, for example). Step 308 of the method 300 optionally also comprises merging any new generic locks set at the step with any other generic locks previously set by the method 300 and associated with, for example, the ongoing process involving the first user and the first application 104.

In one embodiment, the method 300 accommodates the possibility that not all users may be using the first application 104 to access the services of the second application 112. For example, there may be a second user who directly initiates an instance of the second application 112 without using the first application 104 and the execution controller 108. In such a scenario, the second user may undesirably bypass the generic locking behavior provided by the method 300. For example, in one embodiment, it is the execution controller 108 which attempts to set a generic lock at step 308, and if such an attempt is denied because another user already has some type of exclusive lock on the data involved, the execution controller 108 will alert the first user. However, if a second user directly accesses the second application 112, the execution controller 108 will not provide the generic locking behavior for the second user, and will thus also not be able to deny the first user a generic lock if the second user has set an exclusive lock on to the data by directly accessing the second application 112. To accommodate this scenario, one embodiment of the method 300 provides a checksum functionality to attempt to determine if data has been modified by bypassing the generic locking behavior.

For every service request with a fixed position within a series of service requests, providing the same input data should return the same output data. If for a subsequent service request, the same output data is not returned for the same input data, the service is either not deterministic or data has changed and the second application 112 is working on outdated data. Thus, in one embodiment, the execution controller 108 creates a unique checksum, using an algorithm, for every service response. In one embodiment, the execution controller 108 uses a hash value algorithm to create the unique checksum. For example, an MD5 hash value algorithm, which has a fairly acceptable collision probability, can be used to generate the checksum. The algorithm is used to generate a checksum based on the input and output data, relative to the execution controller 108, related to the service request 408. If the series of service requests 408 is re-executed, the execution controller 108 compares the stored checksum for every service request 408 with the newly calculated one. If both checksums are equal, the execution controller 108 assumes that no data was changed in the meantime. If both checksums are not equal, data has changed.

As all services are effectively stateless, the data has to be changed on the database 116 and the user is working with outdated data. The execution controller 108 is able to identify the service and its position within the series of services and raise a corresponding message to the first application 104 or the first user. The first application 104 can ask the fist user to re-read data, continue anyway or cancel the first application 104.

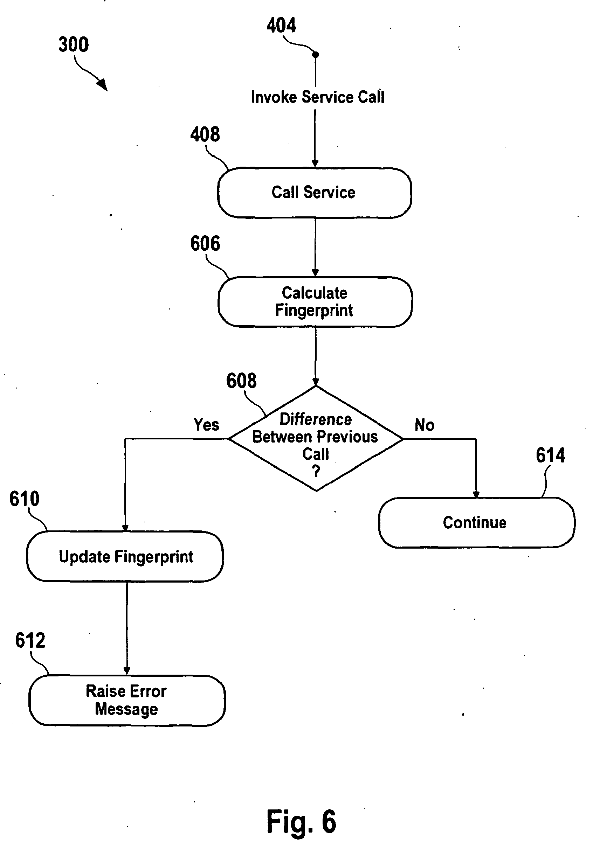

FIG. 6 depicts one scenario involving at least part of an embodiment of the method 300 in which the method 300 includes the checksum functionality. The embodiment of the part of the method 300 depicted in FIG. 6 may overlap parts of the embodiment of the method 300 depicted in FIG. 3, and provide more detail in some aspects. As depicted in FIG. 6, at step 404 a service from the second application 112 is invoked 404 by the first application 104. The depicted embodiment of the method 300 proceeds to step 408 after step 404. At step 408, the service is requested 408 from the second application 112 by the execution controller 108. The depicted embodiment of the method 300 proceeds to step 606 after step 408. At step 606, the checksum based on the input and output data related to the service is calculated. The depicted embodiment of the method 300 proceeds to step 608 after step 606. At step 608, the method 300 determines if there is a difference between the checksum of the just-requested performance of the service in relation to the requested performance of the service most immediately-previous to the just-requested performance. If the determination is positive, the depicted embodiment of the method 300 proceeds to step 610 after step 608. At step 610, the method 300 updates the checksum of the just-requested service. The depicted embodiment of the method 300 proceeds to step 612 after step 610. At step 612, the execution controller 108 raises an error message to the first user indicating that the checksum has changed. If the determination is negative at step 608, the depicted embodiment of the method 300 proceeds to step 614. At step 614, the method 300 continues without raising an error message, for example allowing the first user to continue with the ongoing process in the first application 104.

In one embodiment, the software 100 comprises computer program instructions, which when executed by the processor 208, enable the performance of the method 300. For example, the computer program instructions of the software 100 optionally enable the automatic performance of the method 300. In one embodiment, the software 100 comprises computer program instructions, which when executed by the processor 208, and receive input from a user such as a human operator, enable the performance of the method 300. In one embodiment, a computer readable medium comprises the computer program instructions of the software 100, which when executed by the processor 208, enable the performance of the method 300. In one embodiment, a system comprises means to perform each of the steps of the method 300. For example, in one embodiment, the means to perform each of the steps of the method 300 comprise elements of the computing environment 200. Further embodiments are also possible, which are the result of variously combining steps, elements or embodiments described herein. In an example, embodiments of the method 300 may include or exclude optional steps. Further embodiments, which would be discernable based on the disclosure of the present Application, are also possible.

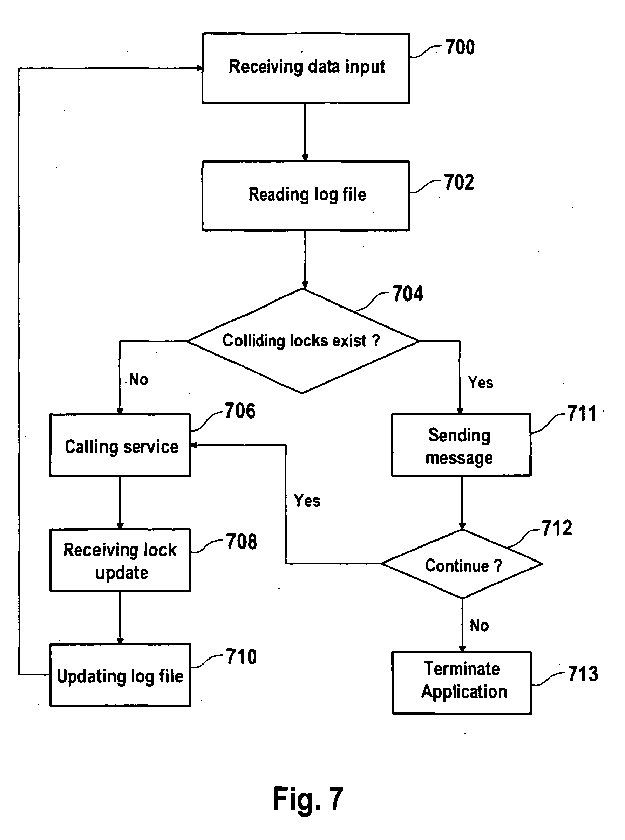

Fig. 7 shows a flowchart illustrating the method of managing a generic lock to a data object. In step 700, a data input is received by a current operation of a user interface of a first application, wherein the data input is related to a data object which is accessible by a service of a second application. In the present context, user interface can be understood as a graphical user interface, but it may be generally related to any kind of window of a graphical user interface or it may be related to a certain user, to a certain process.

After having received the data input in step 700, a log file is read in step 702. The log file comprises information relating to a potentially present generic lock associated with the data object. In case in step 704 it is determined that the data object is already locked to another user interface which means that a colliding lock is existing, step 711 is carried out which sends a respective message to the user interface of the first application which tries to access the data object. Such a message may comprise information about the other user interface accessing the data object in parallel. This is followed by step 712 which might grant the user interface which likes to access the data object the possibility to continue with step 706 by calling the service, however in read only mode and with the danger that the data object is being modified until the said user interface requests the same service another time. Optionally the user may have the possibility to terminate the application with step 713. Optionally, after receiving the message in step 711 the user may select to continue working on another data object which means that the procedure is repeated with different data inputs starting again in step 700.

If step 704 returns that in the no generic data lock is blocking the access to the data object, the method continues after step 704 with step 706 by calling the service, which is followed by step 708. In step 708 an updated data lock associated with data object is received from the second application. This updated data lock is then used to update in step 710 the local log file. After step 710, the procedure is repeated starting with step 700. In step 700, the user may select to work with the same service again which means that the lock to that certain data object related to that service is maintained throughout the upcoming steps 702 to 710. However, if the call in step 706 was a final call which for example finalized a certain transaction, updating the log file in step 710 may already have comprised the canceling of the lock to said certain data object, such that any other user interface would now be able to access said data object without any restrictions.

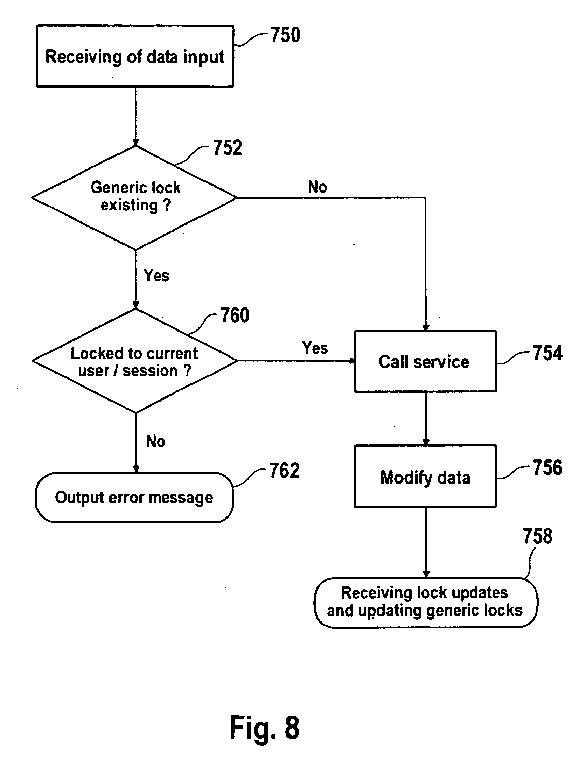

Fig. 8 shows a flowchart illustrating a method of managing an exclusive lock to a data object. Again, in step 750 a data input is received by a current session of the user interface of a first application. Thereby, the data input is received by a controller. This causes the controller in step 752 to check if a generic lock is existing which is associated with the data object. If step 752 returns that there is no generic lock existing, the procedure continues with step 754 which calls the service and optionally also allows in step 756 to modify data related to the data object. Thereupon, the procedure ends in step 758 with receiving lock updates from the second application and updating generic locks with respect to the data object at the controller.

If however step 752 returns that a generic lock is already existing, the controller determines in step 760 if the generic lock is associated for example with a current user or a current window of the user interface. If step 760 returns, that for e.g. a different user is already exclusively working with the data object, and the current user is not allowed to have write access to said data object. Therefore, in step 762 an error message is output to the respective user interface. This error message may comprise some optional actions a user could perform which may comprise a modification of the data input starting again from step 750 or a calling of the service in step 754 in a read only mode for the respective locked data object.

If however step 760 returns, that the existing generic lock is locked to the current user or to an ongoing session, the current user has the exclusive right to read and modify the respective data object. Therefore, after step 760 the step 754 comprising calling the service is performed which grants the user also the possibility to modify the data in step 756. The procedure is terminated in step 758 with receiving lock updates from the second application and updating generic locks at the controller.

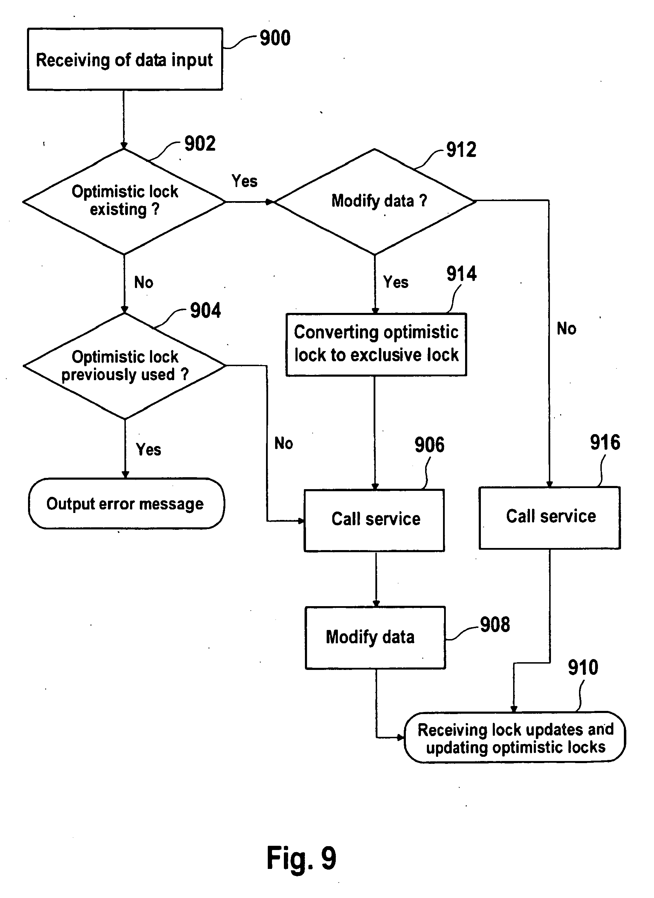

Fig. 9 shows a flowchart illustrating a method of managing an optimistic lock to a data object. In step 900, a data input is received, the data input being related to a data object, the data object being related to a service which is performable at a second application. A controller determines in step 902, if an optimistic lock is existing. If step 902 returns that such an optimistic lock is not existing and if the subsequent step 904 also returns, that an optimistic lock has not been previously used by the same user interface in a current operation of that user interface, no locks at all are existing for said data object. In order to clarify this point, current operation of the user interface has to be understood for example as an operation of the user interface during a certain time a user is continuously using the user interface, however with the restriction that during said operation the second application is only called discontinuously for performing certain services related to operation of said user interface.

Therefore, after step 904 step 906 with calling the service an optional step 908 with modifying of the data can be performed. Then the procedure ends in step 910 with receiving lock updates and updating of optimistic locks.

If step 902 returns that an optimistic lock is already existing it has to be determined in step 912, if a modification of the data object is necessary due to calling of the service of the second application. If such a data modification is not necessary a calling of the service can be performed by the controller in step 916, which ends with receiving lock updates and updating optimistic locks in step 910. However if step 912 returns that a data object modification has to be performed, in step 914 a conversion of the optimistic lock to an exclusive lock is performed. This allows the current user (interface) to exclusively modify the respective data object indirectly via the controller. Other users which previously were also granted an optimistic lock on the data object loose their optimistic locks immediately at step 914. This ensures, that after step 914 no other user interface is able to access and modify the respective data object. After step 914, in step 906 the service is called and in step 908 the data object is modified. The procedure ends with step 910 with receiving lock updates and updating optimistic locks.

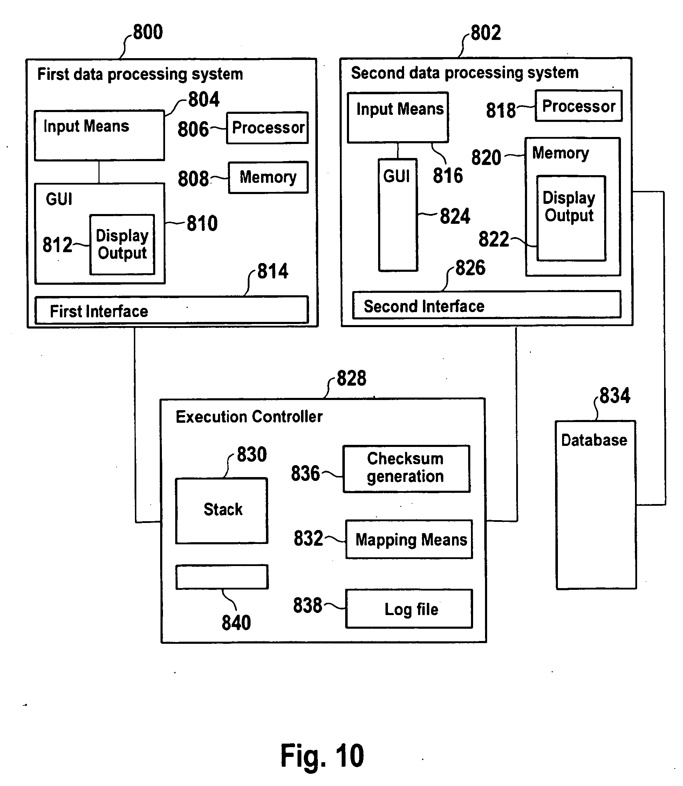

Fig. 10 shows a block diagram illustrating a data processing system according to the invention. The data processing system comprises a first data processing system 800 and a second data processing system 802. The first data processing system 800 comprises a processor 806 adapted to execute computer executable instructions which may be comprised in a memory 808. In the embodiment of fig. 10, the memory 808 comprises a first application which is executed by the first data processing system. The first data processing system further comprises input means 804 like for example a keyboard, mouse, haptic input means, input means relating to voice commands etc. The first data processing system 800 further comprises a graphical user interface 810 which is adapted to provide a display output 812 to a user. The first data processing system 800 further comprises a first interface 814 adapted to communicate with an execution controller 828. Similarly to the first data processing system 800 the second data processing system 802 comprises input means 816, a processor 818 and a memory 820. In the memory 820, a second application is comprised which is executed by the second data processing system. The second data processing system 802 further comprises a graphical user interface 824 and a second interface 826.

The major difference between the first data processing system 800 and the second data processing system 802 is that the graphical user interface generated by the second application may for example be rather outdated, and a user uses the graphical user interface 810 generated by the first application 800 to retrieve data or in general display outputs 822 originally designated for the graphical user interface 824 on its new graphical user interface 810. Thereby, the graphical user interface 810 compared to the graphical user interface 824 may possess a new design, new functionalities.

However, since a user will only access the first application via the input means 804, the first application needs to access the second application. This is done by a connection between the first interface 814 of the first data processing system and the second interface 826 of the second data processing system. Since the graphical user interface 810 with the display output 812 may comprise new functionalities, new design and therewith also rearrangement of the display outputs 822 originally designated for the graphical user interface 824, a mapping between data items of the display output 822 and the new display output 812 has to be performed. This is done by the execution controller 828 which is interposed in between the first interface 814 and the second interface 826.

The execution controller comprises mapping means 832 and a stack 830. The stack 830 has the purpose that all navigation steps and data input steps which are performed via the input means 804 at the first data processing system 800 are recorded by the execution controller 828, wherein for each new navigation input or data input the new input is added to the ordered stack 830. After each of the input steps the stack is passed from the execution controller 828 to the second interface 826 of the second data processing system 802.

The execution controller 828 further comprises a log file 838 and means 840 to call a service of the second application or sending a message to the graphical user interface 810 of the first application. When a user inputs data via the input means 804 to the graphical user interface 810, the input is received by the execution controller 828 and the log file 838 is read. Thereby, the log file comprises a list of generic data locks associated with data input or more specifically with the data object at the second application related to said data input. Depending on the content of the log file which means depending if a generic lock is present or not, the execution controller 828 may call the service at the second application using the means 840 or may signal a special message to the graphical user interface 810 informing the user interface that the data object he tries to access is currently locked due to a usage by for example another user interface.

Optionally the execution controller 828 further comprises means 836 for generating a checksum based on the user input received from the first data processing system 800 and a respective output of the second data processing system 802. If a certain input at the first data processing system 800 results the first time in a first output of the second data processing system 802 and the second time in a different second output than the first output, a change to a respective data object which was accessed via the second data processing system 802 by the second application due to the respective input has occurred. In this situation, the execution controller 828 sends a special signaling message to the graphical user interface 810 of the first application running at the first data processing system giving the user the opportunity to either continue with the modified data object or canceling his current access.

The second data processing system is adapted for 'dark processing', which has to be understood as a processing in such a way, that the user at the first data processing system 800 does not see the result of the processing, nor that the graphical user interface 810 with its display output 812 is necessarily updated by the end of the processing. For this purpose, the second interface 826 comprises a batch input functionality. A stack 830 can therewith be batch processed by the processor 818 of the second data processing system 802. After batch processing of the stack 830, by means of the second application the second data processing system 802 generates a respective display output 822.

Only after a respective command is sent from the input means 804 to the second data processing system 802, the stack 830 is processed in a final processing step such that the results generated by processing the stack 830 are written to a database 834 connected to the second data processing system 802. This is usually the point where changes to respective data objects occur. Depending if the user wants to continue with the modified data objects or if he chooses working with different data objects, a lock to the respective data object can be further maintained or deleted.

## Claims

1. A computer implemented method of coupling by a controller (108; 828) a first application program (104) running on a first data processing system (800) to a second application program (112) running on a second data processing system (802), the controller comprising a log file (838) for storing a plurality of generic data locks to data objects, the data objects being accessible by a plurality of services of the second application program (112), the method comprising:
- invoking by the controller (108; 828) the second application program (112) running on the second data processing system (802) from the first application program (104) running on the first data processing system (800),
- receiving by a current user input operation a data input via a user interface (810) of the first data processing system (800), the data input specifying at least one of the plurality of data objects and one service of the plurality of services,
- reading the log file (838),
- determining whether a colliding lock for the at least one of the plurality of data objects is comprised in the log file, wherein in case a colliding lock is determined a message is sent to the user interface (810) and wherein in case no colliding lock is determined the service is called,
- in response to calling the service, receiving an updated data lock associated with the data object from the second application program (112), and
updating the log file (838) with the received updated data lock,
wherein
the second application program setting locks and releasing all locks set before terminating, the method further comprising:
- activating tracking (428) of all locks set (412) and released (416) by the second application program before calling the second application by the controller for obtaining (306) a log,
- based on the log, the first application program creating (308) generic locks for all objects for which locks have been set by the second application program, wherein before terminating the first application program, all generic locks are released ,
wherein the generic locks are optimistic locks, wherein the data locks set by the second application program (112) are exclusive data locks, wherein in case the optimistic lock is associated with the data object, granting a non-exclusive reservation on write access to the data object for the user interface (810), the optimistic lock not preventing other user interfaces (810) from being granted other non-exclusive reservations on write access to the data object, wherein the optimistic lock is capable of being converted to an exclusive lock, the converting comprising cancelling any other optimistic locks on the specific data by other users.

2. The method of claim 1, wherein
- in case no optimistic data lock is associated with the data object and no optimistic data lock was associated with the data object in the current operation of the user interface (810), calling the service,
- in case no optimistic data lock is associated with the data object and an optimistic data lock was associated with the data object in the current operation of the user interface (810), sending the message to the user interface (810),
- in case an optimistic data lock is associated with the data object, calling the service.

3. The method of any of the previous claims, wherein the generic data lock associated with the data object comprises a generic lock object and a generic lock argument, wherein the generic lock argument describes a second application program (112) data lock object and a second application program (112) data lock argument, wherein the second application (112) data lock object and the second application program (112) data lock argument were received with the updated data lock associated with the data object from the second application program (112).

4. The method of any of the previous claims, wherein the data object is comprised in a database (116; 834), wherein for accessing the data object a communication is performed between the second application program (112) and the database (116; 834).

5. The method of any of the previous claims, wherein the generic lock type is independent of the second application program (112) data lock type.

6. The method of any of the previous claims, wherein the second application program (112) is used in an effectively stateless manner, the effectively stateless manner comprising initiating the second application program (112) in response to the calling of the service and terminating the second application program (112) before receiving any other service calls from the first application program (104).

7. The method of any of the previous claims, wherein the first application program (104) and the generic data lock are associated with a first session, the second application program (112) and the second application program (112) data lock are associated with a second session, the first and second sessions being associated with the user interface (810), the second session ending before the first session, the method further comprising deleting the second application program (112) data lock before terminating the second application program (112).

8. The method of any of the previous claims, further comprising:
- receiving an output of the second application program (112) by the controller (108; 828) in response to calling the service,
- generating, by the controller (108; 828), a first checksum based on the data input received by the current session of the user interface (810) of the first application program (104) and the received output,
- associating the first checksum with the called service and storing the associated first checksum;
- in case of calling the same service using the same data input again, generating, by the execution controller (108; 828), a second checksum based on said data input and the respective output received by calling the service using said data input and comparing the second checksum to the first checksum.

9. The method of claim 8, wherein in case the first and the second checksum are differing, sending a message to the user interface (810).

10. A computer program product comprising computer executable instructions adapted to perform the method steps defined in claims 1-9.

11. A data processing system comprising a controller (108; 828) for coupling a first application program (104) running on a first data processing system (800) to a second application program (112) running on a second data processing system (802), the controller comprising a log file (838) for storing a plurality of generic data locks to data objects, the data objects being accessible by a plurality of services of the second application program (112), the system comprising:
- means for invoking by the controller (108; 828) the second application program (112) running on the second data processing system (802) from the first application program (104) running on the first data processing system (800),
- means for receiving by a current user input operation a data input via a user interface (810) of the first data processing system (800), the data input specifying at least one of the plurality of data objects and one service of the plurality of services,
- means for reading the log file (838),
- means for determining whether a colliding lock for the at least one of the plurality of data objects is comprised in the log file, wherein in case a colliding lock is determined the system is adapted to send a message to the user interface (810) and wherein in case no colliding lock is determined the system is adapted to call the service,
- means for receiving an updated data lock associated with the data object from the second application program (112) in response to calling the service, and
updating the log file (838) with the received updated data lock,
wherein
the second application program is adapted for setting locks and releasing all locks set before terminating, the system further comprising:
- means for activating tracking (428) of all locks set (412) and released (416) by the second application program before calling the second application program by the controller for obtaining (306) a log,
- wherein the first application program is adapted for, based on the log creating (308) generic locks for all objects for which locks have been set by the second application program, wherein the system is adapted for releasing all generic locks before terminating the first application program,
wherein the generic locks are optimistic locks, wherein the data locks set by the second application (112) program exclusive data locks, wherein in case the optimistic lock is associated with the data object, the system is adapted for granting a non-exclusive reservation on write access to the data object for the user interface (810), the optimistic lock not preventing other user interfaces (810) from being granted other non-exclusive reservations on write access to the data object, wherein the optimistic lock is capable of being converted to an exclusive lock, the converting comprising cancelling any other optimistic locks on the specific data by other users.

12. The system of claim 11, the controller (108; 828) further comprising:
- means for determining if an optimistic data lock is associated with the data object,
wherein the controller (108; 828) is adapted for
- calling the service in case no optimistic data lock is associated with the data object and no optimistic data lock was associated with the data object in the current operation of the user interface (810),
- sending a message to the user interface (810) in case no optimistic data lock is associated with the data object and an optimistic data lock was associated with the data object in the current operation of the user interface (810),
- calling the service in case an optimistic data lock is associated with the data object.

13. The system of any of the previous claims 11 or 12, further comprising:
- means for receiving an output of the second application program (112) by the controller (108; 828) in response to calling the service,
- means (836) for generating, by the controller (108; 828), a first checksum based on the data input received by the current session of the user interface (810) of the first application program (104) and the received output,
- means for associating the first checksum with the called service and storing the associated first checksum;
- means (836) for generating, in case of calling the same service using the same data input again, a second checksum based on said data input and the respective output received by calling the service using said data input and
- means for comparing the second checksum to the first checksum.

14. The system of claim 13, further comprising means for sending a message to the user interface (810) in case the first and the second checksum are differing.

## Patentansprüche

1. Ein Computer-implementiertes Verfahren der Kopplung durch einen Controller (108; 828) eines ersten Anwendungsprogramms (104), laufend auf einem ersten Dateiverarbeitungssystem (800), an ein zweites Anwendungsprogramm (112), laufend auf einem zweiten Datenverarbeitungssystem (802), der Controller eine Log-Datei (838) beinhaltend, zur Speicherung einer Vielzahl generischer Daten-Locks zu Daten-Objekten, die Daten-Objekte zugänglich für eine Vielzahl von Diensten des zweiten Anwendungsprogramms (112), das Verfahren umfassend:
- Aufruf, durch den Controller (108;828), des zweiten Anwendungsprogramms (112), laufend auf dem zweiten Datenverarbeitungsprogramm (802) von dem ersten Anwendungsprogramm (104), laufend auf dem ersten Datenverarbeitungssystem (800),
- Erhalt, durch eine momentane Benutzereingabe, eines Daten-Inputs über ein User-interface (810) des ersten Datenverarbeitungssystems (800), der Daten-Input zumindest eine der Vielzahl von Daten-Objekten und einen Dienst der Vielzahl von Diensten spezifizierend,
- Lesen der Log-Datei (838),
- Ermitteln ob ein kollidierender Lock für zumindest eines der Vielzahl von Daten-Objekten in der Log-Datei beinhaltet ist, wobei im Fall, dass ein kollidierendes Lock ermittelt wird, eine Nachricht an das User-Interface (810) gesendet wird und wobei, im Falle, dass kein kollidierendes Lock ermittelt wird der Dienst aufgerufen wird,
- Als Antwort auf den Aufruf des Dienstes, Erhalt eines aktualisierten Daten-Locks, verknüpft mit dem Daten-Objekt des zweiten Anwendungsprogramms (112), und Aktualisierung der Log-Datei (838) mit dem erhaltenen, aktualisierten Daten-Lock,
mit
dem zweite Anwendungsprogramm, Locks setzend und alle gesetzten Locks lösend vor Beendung, mit folgenden weiteren Schritten:
- Aktivierung einer Verfolgung (428) aller Locks gesetzt (412) und gelöst (416) durch das zweite Anwendungsprogramm, vor dem Aufrufen der zweiten Anwendung durch den Controller um einen Log zu erhalten (306),
- Basierend auf dem Log, das erste Programm generische Locks erzeugend (308) für alle Objekte, für die Locks durch das zweite Anwendungsprogramm gesetzt wurden, wobei vor Beendung des ersten Anwendungsprogramms alle generischen Locks gelöst werden,
wobei die generischen Locks optimistische Locks sind, wobei die Daten-Locks, gesetzt durch das zweite Anwendungsprogramm (112) exklusive Daten-Locks sind, wobei, falls das optimistische Lock mit einem Daten-Objekt assoziiert ist, eine nicht-exklusive Reservation des Schreibzugriffs auf das Datenobjekt für das User-Interface (810) gewährend, das optimistische Lock nicht andere User-Interfaces (810) davon abhält andere nicht-exklusive Reservationen auf den Schreibzugriff auf das Datenobjekt gewährt zu bekommen, wobei das optimistische Lock in der Lage ist in ein exklusives Lock konvertiert zu werden, die Konvertierung eine Aufhebung aller weiteren optimistischen Locks auf den spezifischen Daten durch andere Benutzer beinhaltend.

2. Das Verfahren aus Anspruch 1, wobei
- falls kein optimistisches Daten-Lock mit dem Datenobjekt assoziiert ist und kein optimistisches Daten-Lock mit dem Datenobjekt verknüpft wurde im laufenden Betrieb des User-Interface (810), Aufrufen des Dienstes,
- falls kein optimistisches Daten-Lock mit dem Datenobjekt assoziiert ist und ein optimistisches Daten-Lock mit dem Datenobjekt im laufenden Betrieb des User-Interface (810) assoziiert wurde, Senden der Nachricht an das User-Interface (810),
- falls ein optimistisches Daten-Lock mit dem Datenobjekt assoziiert ist, Aufrufen des Dienstes.

3. Das Verfahren eines beliebigen der vorangegangenen Ansprüche, wobei das generische Daten-Lock, assoziiert mit dem Daten-Objekt ein generisches Lock-Objekt und ein generisches Lock-Argument beinhaltet, wobei das generische Lock-Argument ein zweites Anwendungsprogramm (112) Daten-Lock Objekt und ein zweites Anwendungsprogramm (112) Daten-Lock Argument beschreibt, wobei das zweite Anwendungsprogramm (112) Daten-Lock Objekt und das zweite Anwendungsprogramm (112) Daten-Lock Argument empfangen wurden, mit dem aktualisierten Daten-Lock, assoziiert mit dem Daten-Objekt aus dem zweiten Anwendungsprogramm (112).

4. Das Verfahren eines beliebigen der vorangegangenen Ansprüche, wobei das Daten-Objekt in einer Datenbank (116; 834) enthalten ist, wobei für einen Zugriff auf das Datenobjekt eine Kommunikation durchgeführt wird zwischen dem zweiten Anwendungsprogramm (112) und der Datenbank (116; 834).

5. Das Verfahren eines beliebigen der vorangegangenen Ansprüche, wobei der generische Lock-Typ unabhängig ist von zweiten Anwendungsprogramm (112) Daten-Lock Typ.

6. Das Verfahren eines beliebigen der vorangegangenen Ansprüche, wobei das zweite Anwendungsprogramm (112) in einer effektiv zustandslosen Art und Weise genutzt wird, die zustandslose Art und Weise die Initiierung des zweiten Anwendungsprogramms (112) als Reaktion auf den Aufruf des Dienstes und Beendung des zweiten Anwendungsprogramms (112) vor dem Empfang sonstiger Dienstaufrufe durch das erste Anwendungsprogramm (104) beinhaltend.

7. Das Verfahren eines beliebigen der vorangegangenen Ansprüche, wobei das erste Anwendungsprogramm (104) und das generische Daten-Lock assoziiert sind mit einer ersten Sitzung, das zweite Anwendungsprogramm (112) und das Daten-Lock des zweiten Anwendungsprogramms (112) assoziiert sind mit einer zweiten Sitzung, die erste und zweite Sitzung assoziiert mit dem User-Interface (810), die zweite Sitzung vor der ersten Sitzung endend, das Verfahren weiter beinhaltend das Löschen des zweite Anwendungsprogramm (112) Daten-Locks vor Beendung des zweiten Anwendungsprogramms (112).

8. Das Verfahren eines beliebigen der vorangegangenen Ansprüche, weiter beinhaltend:
- Empfang einer Ausgabe des zweiten Anwendungsprogramms (112) durch den Controller (108; 828) in Reaktion auf den Aufruf des Dienstes,
- Erzeugung, durch den Controller (108;828), einer ersten Prüfsumme basierend auf der Dateneingabe, empfangen durch die laufende Sitzung des User-Interface (810) des ersten Anwendungsprogramms (104) und der erhaltenen Ausgabe,
- Verknüpfung der ersten Prüfsumme mit dem aufgerufenen Dienst und Speicherung der verknüpften ersten Prüfsumme;
- Im Falle eines erneuten Aufrufs des gleichen Dienstes unter Benutzung der gleichen Dateneingabe, Erzeugung, durch den Execution-Controller (108; 828), einer zweiten Prüfsumme, basierend auf besagter Dateneingabe und der zugehörigen Ausgabe, erhalten durch Aufrufen des Dienstes unter Benutzung besagter Dateneingabe und Vergleich der zweiten Prüfsumme mit der ersten Prüfsumme.

9. Das Verfahren aus Anspruch 8, wobei im Falle eines Unterschieds zwischen erster und zweiter Prüfsumme eine Nachricht an das User Interface (810) gesendet wird.

10. Ein Computerprogrammprodukt, bestehend aus computer-ausführbaren Anweisungen, angepasst um die Verfahrensschritte, definiert in den Ansprüchen 1-9, durchzuführen.

11. Ein Datenverarbeitungssystem, einen Controller (108; 828) beinhaltend, zur Kopplung eines ersten Anwendungsprogramms (104), laufend auf einem ersten Datenverarbeitungssystem (800) an ein zweites Anwendungsprogramm (112) laufend auf einem zweiten Datenverarbeitungssystem (802), der Controller eine Log-Datei (838) beinhaltend, zur Speicherung einer Vielzahl von generischen Daten-Locks zu Daten-Objekten, die Daten-Objekte zugänglich durch eine Vielzahl von Diensten des zweiten Anwendungsprogramms (112), das System beinhaltend:
- Mittel zur Aktivierung, durch den Controller (108; 828), des zweiten Anwendungsprogramms (112), laufend auf dem zweiten Datenverarbeitungssystem (802) von dem ersten Anwendungsprogramm (104) laufend auf dem ersten Datenverarbeitungssystem (800),
- Mittel zum Empfangen, durch eine laufende Benutzereingabe, einer Dateneingabe über ein User-Interface (810) des ersten Datenverarbeitungssystems (800), die Dateneingabe zumindest eine der Vielzahl von Datenobjekten und einen Dienst aus der Vielzahl der Dienste spezifizierend,
- Mittel zum Lesen der Log-Datei (838),
- Mittel zur Bestimmung, ob ein kollidierendes Lock für zumindest eines aus der Vielzahl der Datenobjekte in der Log-Datei enthalten ist, wobei in dem Fall, dass ein kollidierendes Lock ermittelt wird, das System angepasst ist eine Nachricht an das User-Interface (810) zu schicken und wobei in dem Fall, dass kein kollidierendes Lock ermittelt wird, das System angepasst ist, den Dienst aufzurufen,
- Mittel für den Empfang eines aktualisierten Daten-Locks, assoziiert mit dem Daten-Objekt von dem zweiten Anwendungsprogramm (112) als Reaktion auf den Aufruf des Dienstes, und Aktualisierung der Log-Datei (838) mit dem erhaltenen, aktualisierten Daten-Lock,
wobei
das zweite Anwendungsprogramm angepasst ist Locks zu setzen und alle gesetzten Locks zu lösen, bevor es endet, das System weiter beinhaltend:
- Mittel zur Aktivierung einer Verfolgung (428) aller Locks, gesetzt (412) und gelöst (416) durch das zweite Anwendungsprogramm, vor Aufruf des zweiten Anwendungsprogramms durch den Controller um einen Log zu erhalten (306),
- Wobei das erste Anwendungsprogramm angepasst ist für, basierend auf dem Log, die Erstellung (308) generischer Locks für alle Objekte, für die Locks durch das zweite Anwendungsprogramm gesetzt wurden, wobei das System angepasst ist für die Lösung aller generischen Locks vor Beendigung des ersten Anwendungsprogramms,
wobei die generischen Locks optimistische Locks sind, wobei die Daten-Locks, gesetzt durch das
zweite Anwendungsprogramm (112) exklusive Daten-Locks sind, wobei, falls das optimistische Lock mit einem Daten-Objekt assoziiert ist, das System angepasst ist, eine nicht-exklusive Reservation des Schreibzugriffs auf das Datenobjekt für das User-Interface (810) zu gewähren, das optimistische Lock andere User-Interfaces (810) nicht davon abhaltend andere nicht-exklusive Reservationen auf den Schreibzugriff auf das Datenobjekt gewährt zu bekommen, wobei das optimistische Lock in der Lage ist in ein exklusives Lock konvertiert zu werden, die Konvertierung eine Aufhebung aller weiteren optimistischen Locks auf den spezifischen Daten durch andere Benutzer beinhaltend.

12. Das System aus Anspruch 11, der Controller (108; 828) weiter beinhaltend:
- Mittel zur Bestimmung, ob ein optimistisches Daten-Lock mit dem Daten-Objekt assoziiert ist,
wobei der Controller (108; 828) angepasst ist für:
- Aufrufen des Dienstes, falls kein optimistisches Daten-Lock mit dem Datenobjekt assoziiert ist und kein optimistisches Daten-Lock mit dem Datenobjekt assoziiert war in der laufenden Betätigung des User-Interface (810),
- Senden einer Nachricht an das User-Interface (810), falls kein optimistisches Daten-Lock mit dem Datenobjekt assoziiert ist und ein optimistisches Daten-Lock mit dem Datenobjekt in der laufenden Betätigung des User-Interface (810) assoziiert wurde,
- Aufrufen des Dienstes, falls ein optimistisches Daten-Lock mit dem Datenobjekt assoziiert ist.

13. Das System aus einem beliebigen der vorangegangenen Ansprüche 11 oder 12, weiter beinhaltend:
- Mittel zum Empfang einer Ausgabe des zweiten Anwendungsprogramms (112) durch den Controller (108; 828) in Reaktion auf den Aufruf des Dienstes,
- Mittel (836) zur Erzeugung, durch den Controller (108;828), einer ersten Prüfsumme basierend auf der Dateneingabe, empfangen durch die laufende Sitzung des User-Interface (810) des ersten Anwendungsprogramms (104) und der erhaltenen Ausgabe,
- Mittel zur Verknüpfung der ersten Prüfsumme mit dem aufgerufenen Dienst und Speicherung der verknüpften ersten Prüfsumme;
- Mittel (836) zur, im Falle eines erneuten Aufrufs des gleichen Dienstes unter Benutzung der gleichen Dateneingabe, Erzeugung einer zweiten Prüfsumme, basierend auf besagter Dateneingabe und der zugehörigen Ausgabe, erhalten durch Aufruf des Dienstes unter Benutzung besagter Dateneingabe, und
- Mittel zum Vergleichen der zweiten Prüfsumme mit der ersten Prüfsumme.

14. Das System aus Anspruch 13, weiter Mittel umfassend, zur Sendung einer Nachricht an das User-Interface (810), falls sich die erste und die zweite Prüfsumme unterscheiden.

## Revendications

1. Procédé mis en oeuvre sur ordinateur de coupler par un contrôleur (108 ; 828) un premier programme d'application (104) s'exécutant sur un premier système de traitement de données (800) à un second programme d'application (112) s'exécutant sur un second système de traitement de données (802), le contrôleur comprenant un fichier-journal (838) pour stocker une pluralité de verrous de données génériques à des objets de données, les objets de données étant accessibles par une pluralité de services du second programme d'application (112), le procédé comprenant :
- invoquer, par le contrôleur (108 ; 828), le second programme d'application (112) s'exécutant sur le second système de traitement de données (802) à partir du premier programme d'application (104) s'exécutant sur le premier système de traitement de données (800),
- recevoir, par une opération d'entrée d'utilisateur actuelle, une entrée de données via une interface utilisateur (810) du premier système de traitement de données (800), l'entrée de données spécifiant au moins un parmi la pluralité d'objets de données et un service parmi la pluralité de services,
- lire le fichier-journal (838),
- déterminer si un verrou de collision pour le au moins un parmi la pluralité d'objets de données est compris dans le fichier-journal, dans lequel au cas où un verrou de collision est déterminé, un message est envoyé à l'interface utilisateur (810) et dans lequel au cas où aucun verrou de collision n'est déterminé, le service est appelé,
- en réponse à l'appel du service, recevoir un verrou de données mis à jour associé à l'objet de données à partir du second programme d'application (112), et mettre à jour le fichier-journal (838) avec le verrou de données mis à jour reçu,
dans lequel
le second programme d'application pose des verrous et retire tous les verrous posés avant l'achèvement, le procédé comprenant en outre :
- activer le suivi (428) de tous les verrous posés (412) et retirés (416) par le second programme d'application avant d'appeler le second programme d'application par le contrôleur pour obtenir (306) un journal,
- sur la base du journal, le premier programme d'application créant (308) des verrous génériques pour tous les objets pour lesquels des verrous ont été posés par le second programme d'application, dans lequel avant l'achèvement du premier programme d'application, tous les verrous génériques sont retirés,
dans lequel les verrous génériques sont des verrous optimistes, dans lequel les verrous de données posés par le second programme d'application (112) sont des verrous de données exclusifs, dans lequel au cas où le verrou optimiste est associé à l'objet de données, accorder une réservation non exclusive d'accès en écriture à l'objet de données pour l'interface utilisateur (810), le verrou optimiste n'empêchant pas d'autres interfaces utilisateurs (810) de se voir accorder d'autres réservations non exclusives d'accès en écriture à l'objet de données, dans lequel le verrou optimiste est capable d'être converti en un verrou exclusif, la conversion comprenant l'annulation de tout autre verrou optimiste sur les données spécifiques par d'autres utilisateurs.

2. Procédé selon la revendication 1, dans lequel
- au cas où aucun verrou de données optimiste n'est associé à l'objet de données et qu'aucun verrou de données optimiste n'était associé à l'objet de données dans l'opération actuelle de l'interface utilisateur (810), appeler le service,
- au cas où aucun verrou de données optimiste n'est associé à l'objet de données et qu'un verrou de données optimiste était associé à l'objet de données dans l'opération actuelle de l'interface utilisateur (810), envoyer le message à l'interface utilisateur (810),
- au cas où un verrou de données optimiste est associé à l'objet de données, appeler le service.

3. Procédé selon l'une quelconque des revendications précédentes, dans lequel le verrou de données générique associé à l'objet de données comprend un objet de verrou générique et un argument de verrou générique, dans lequel l'argument de verrou générique décrit un objet de verrou de données du second programme d'application (112) et un argument de verrou de données du second programme d'application (112), dans lequel l'objet de verrou de données du second programme d'application (112) et l'argument de verrou de données du second programme d'application (112) ont été reçus avec le verrou de données mis à jour associé à l'objet de données provenant du second programme d'application (112).

4. Procédé selon l'une quelconque des revendications précédentes, dans lequel l'objet de données est compris dans une base de données (116 ; 834), dans lequel pour accéder à l'objet de données, une communication est effectuée entre le second programme d'application (112) et la base de données (116 ; 834).

5. Procédé selon l'une quelconque des revendications précédentes, dans lequel le type de verrou générique est indépendant du type de verrou de données du second programme d'application (112).

6. Procédé selon l'une quelconque des revendications précédentes, dans lequel le second programme d'application (112) est utilisé de manière effectivement sans état, la manière effectivement sans état comprenant le lancement du second programme d'application (112) en réponse à l'appel du service et l'achèvement du second programme d'application (112) avant réception de tout autre appel de service provenant du premier programme d'application (104).

7. Procédé selon l'une quelconque des revendications précédentes, dans lequel le premier programme d'application (104) et le verrou de données générique sont associés à une première session, le second programme d'application (112) et le verrou de données du second programme d'application (112) sont associés à une seconde session, les première et seconde sessions étant associées à l'interface utilisateur (810), la seconde session s'achevant avant la première session, le procédé comprenant en outre la suppression du verrou de données du second programme d'application (112) avant l'achèvement du second programme d'application (112).

8. Procédé selon l'une quelconque des revendications précédentes, comprenant en outre :
- recevoir une sortie du second programme d'application (112) par le contrôleur (108 ; 828) en réponse à l'appel du service,
- générer, par le contrôleur (108 ; 828), une première somme de contrôle basée sur l'entrée de données reçue par la session actuelle de l'interface utilisateur (810) du premier programme d'application (104) et la sortie reçue,
- associer la première somme de contrôle au service appelé et stocker la première somme de contrôle associée ;
- en cas d'appel du même service réutilisant la même entrée de données, générer, par le contrôleur d'exécution (108 ; 828), une seconde somme de contrôle basée sur ladite entrée de données et la sortie respective reçue en appelant le service utilisant ladite entrée de données et comparer la seconde somme de contrôle à la première somme de contrôle.

9. Procédé selon la revendication 8, dans lequel au cas où les première et seconde sommes de contrôle sont différentes, envoyer un message à l'interface utilisateur (810).

10. Produit de programme informatique comprenant des instructions exécutables sur ordinateur adaptées pour réaliser les étapes de procédé définies dans les revendications 1 à 9.

11. Système de traitement de données comprenant un contrôleur (108 ; 828) pour coupler un premier programme d'application (104) s'exécutant sur un premier système de traitement de données (800) à un second programme d'application (112) s'exécutant sur un second système de traitement de données (802), le contrôleur comprenant un fichier-journal (838) pour stocker une pluralité de verrous de données génériques à des objets de données, les objets de données étant accessibles par une pluralité de services du second programme d'application (112), le système comprenant :
- des moyens pour invoquer, par le contrôleur (108 ; 828), le second programme d'application (112) s'exécutant sur le second système de traitement de données (802) à partir du premier programme d'application (104) s'exécutant sur le premier système de traitement de données (800),
- des moyens pour recevoir, par une opération d'entrée d'utilisateur actuelle, une entrée de données via une interface utilisateur (810) du premier système de traitement de données (800), l'entrée de données spécifiant au moins un parmi la pluralité d'objets de données et un service parmi la pluralité de services,
- des moyens pour lire le fichier-journal (838),
- des moyens pour déterminer si un verrou de collision pour le au moins un parmi la pluralité d'objets de données est compris dans le fichier-journal, dans lequel au cas où un verrou de collision est déterminé, le système est adapté pour envoyer un message à l'interface utilisateur (810) et dans lequel au cas où aucun verrou de collision n'est détermine, le système est adapté pour appeler le service,
- des moyens pour recevoir un verrou de données mis à jour associé à l'objet de données à partir du second programme d'application (112) en réponse à l'appel du service, et mettre à jour le fichier-journal (838) avec le verrou de données mis à jour reçu,
dans lequel
le second programme d'application est adapté pour poser des verrous et retirer tous les verrous posés avant la fin, le système comprenant en outre :
- des moyens pour activer le suivi (428) de tous les verrous posés (412) et retirés (416) par le second programme d'application avant d'appeler le second programme d'application par le contrôleur pour obtenir (306) un journal,
- dans lequel le premier programme d'application est adapté pour, sur la base du journal, créer (308) des verrous génériques pour tous les objets pour lesquels des verrous ont été posés par le second programme d'application, dans lequel le système est adapté pour retirer tous les verrous génériques avant de mettre fin au premier programme d'application,
dans lequel les verrous génériques sont des verrous optimistes, dans lequel les verrous de données posés par le second programme d'application (112) sont des verrous de données exclusifs, dans lequel au cas où le verrou optimiste est associé à l'objet de données, le système est adapté pour accorder une réservation non exclusive d'accès en écriture à l'objet de données pour l'interface utilisateur (810), le verrou optimiste n'empêchant pas d'autres interfaces utilisateurs (810) de se voir accorder d'autres réservations non exclusives d'accès en écriture à l'objet de données, dans lequel le verrou optimiste est capable d'être converti en un verrou exclusif, la conversion comprenant l'annulation de tout autre verrou optimiste sur les données spécifiques par d'autres utilisateurs.

12. Système selon la revendication 11, le contrôleur (108 ; 828) comprenant en outre :
- des moyens pour déterminer si un verrou de données optimiste est associé à l'objet de données,
dans lequel le contrôleur (108 ; 828) est adapté pour
- appeler le service au cas où aucun verrou de données optimiste n'est associé à l'objet de données et qu'aucun verrou de données optimiste n'était associé à l'objet de données dans l'opération actuelle de l'interface utilisateur (810),
- envoyer un message à l'interface utilisateur (810) au cas où aucun verrou de données optimiste n'est associé à l'objet de données et qu'un verrou de données optimiste était associé à l'objet de données dans l'opération actuelle de l'interface utilisateur (810),
- appeler le service au cas où un verrou de données optimiste est associé à l'objet de données.

13. Système selon l'une quelconque des revendications 11 ou 12 précédentes, comprenant en outre :
- des moyens pour recevoir une sortie du second programme d'application (112) par le contrôleur (108 ; 828) en réponse à l'appel du service,
- des moyens (836) pour générer, par le contrôleur (108 ; 828), une première somme de contrôle basée sur l'entrée de données reçue par la session actuelle de l'interface utilisateur (810) du premier programme d'application (104) et la sortie reçue,
- des moyens pour associer la première somme de contrôle au service appelé et stocker la première somme de contrôle associée ;
- des moyens (836) pour générer, en cas d'appel du même service réutilisant la même entrée de données, une seconde somme de contrôle basée sur ladite entrée de données et la sortie respective reçue en appelant le service utilisant ladite entrée de données et
- des moyens pour comparer la seconde somme de contrôle à la première somme de contrôle.

14. Système selon la revendication 13, comprenant en outre des moyens pour envoyer un message à l'interface utilisateur (810) au cas où les première et seconde sommes de contrôle diffèrent.
